# EUROPEAN PATENT APPLICATION

(11) **EP 4 782 308 A1**
(43) Date of publication of application: **29.07.2026**
(21) Application number: 24867831.0
(22) Date of filing: 22.05.2024
(51) Int. Cl.: B62D 5/04

(54) **STEERING DEVICE**

(30) Priority: 22.09.2023 WO PCT/JP2023/034567
(71) Applicant: JTEKT CORPORATION, Kariya-shi, Aichi 448-8652 (JP)
(72) Inventor: TAKEUCHI Taiki, Kariya-shi, Aichi 448-8652 (JP); CHISAKI Rintaro, Kariya-shi, Aichi 448-8652 (JP); YAMASHITA Shuhei, Kariya-shi, Aichi 448-8652 (JP)
(74) Representative: Winter, Brandl - Partnerschaft mbB
(86) International application number: PCT/JP2024/018808
(87) International publication number: WO 2025/062744

(57) **Abstract**

A steering system (20) includes a steering gearbox (22A) that includes a ball screw shaft (62), a first power assisting unit (22B) that is linked to a first end portion of the ball screw shaft, and a second power assisting unit (22C) that is linked to a second end portion of the ball screw shaft. The first power assisting unit includes a first motor (41) that includes a first motor shaft (41A), and a first reducer (42) that reduces rotations of the first motor. The second power assisting unit includes a second motor (51) that includes a second motor shaft (51A), and a second reducer (52) that reduces rotations of the second motor. The first reducer includes a worm wheel (42A) and a worm (42B). The second reducer includes a first parallel-axis cylindrical gear pair (71) that includes a first gear (71A) and a second gear (71B), and a second parallel-axis cylindrical gear pair (72) that includes a third gear (72A) and a fourth gear (72B).

## Description

### TECHNICAL FIELD

The present disclosure relates to a steering system.

### BACKGROUND ART

An electric power steering system disclosed in Patent Document 1, for example, includes a motor and an RBS type (recirculating ball screw type) steering gearbox. The steering gearbox converts a rotational motion of a steering shaft into a swinging motion of a pitman arm. Direction of steered wheels is changed in conjunction with the pitman arm. Torque of the motor is transmitted as an assist force to a ball screw shaft of the steering gearbox via a reducer. Thus, steering by a steering wheel is assisted.

The reducer is a two-stage gear reducer. The reducer includes a first gearset and a second gearset. The first gearset is a combination of a pinion provided on an output shaft of the motor and an intermediate gear. The second gearset is a combination of a pinion provided on the intermediate gear and a helical gear linked to the ball screw shaft. The intermediate gear and the pinion of the intermediate gear are coaxially linked and rotatably supported inside the same housing.

### Related Art Documents

### Patent Documents

Patent Document 1: US 2022/0135118 A

### SUMMARY OF THE INVENTION

### Problem to be Solved by the Invention

Depending on the size of a vehicle in which a steering system is installed, assisting force may be insufficient. In this case, it is necessary to ensure the assisting force while keeping the steering system from increasing in size.

### Means for Solving the Problem

A steering system according to one aspect of the present disclosure includes a steering gearbox that includes a ball screw shaft, the steering gearbox being configured to convert rotation of the ball screw shaft into steering motion of steered wheels of a vehicle, a first power assisting unit that is linked to a first end portion of the ball screw shaft, and a second power assisting unit that is linked to a second end portion of the ball screw shaft. The first end portion is an end portion of the ball screw shaft that is oriented upward in the vehicle when the steering gearbox is installed in the vehicle. The second end portion is an end portion of the ball screw shaft that is oriented downward in the vehicle when the steering gearbox is installed in the vehicle. The first power assisting unit includes a first motor that includes a first motor shaft, and a first reducer that is configured to reduce rotations of the first motor. The second power assisting unit includes a second motor that includes a second motor shaft, and a second reducer that is configured to reduce rotations of the second motor. The first reducer includes a worm wheel that is linked to the first end portion of the ball screw shaft, and a worm that is linked to the first motor shaft and that meshes with the worm wheel. The second reducer includes a first parallel-axis cylindrical gear pair that includes a first gear and a second gear that mesh with each other, and a second parallel-axis cylindrical gear pair that includes a third gear and a fourth gear that mesh with each other. The first gear is linked to the second motor shaft and is configured to rotate about a first axis. The second gear and the third gear are coaxially linked and are configured to rotate about a second axis. The fourth gear is linked to the second end portion of the ball screw shaft and is configured to rotate about a third axis.

### BRIEF DESCRIPTION OF THE DRAWINGS

[FIG. 1] FIG. 1 is a schematic diagram of a steering system according to an embodiment.
[FIG. 2] FIG. 2 is a sectional view of a steering actuator in FIG. 1, taken along an axial direction.
[FIG. 3] FIG. 3 is a schematic diagram of the steering actuator in FIG. 2.

### MODES FOR CARRYING OUT THE INVENTION

A steering system according to one embodiment will be described.

### <Overall Configuration>

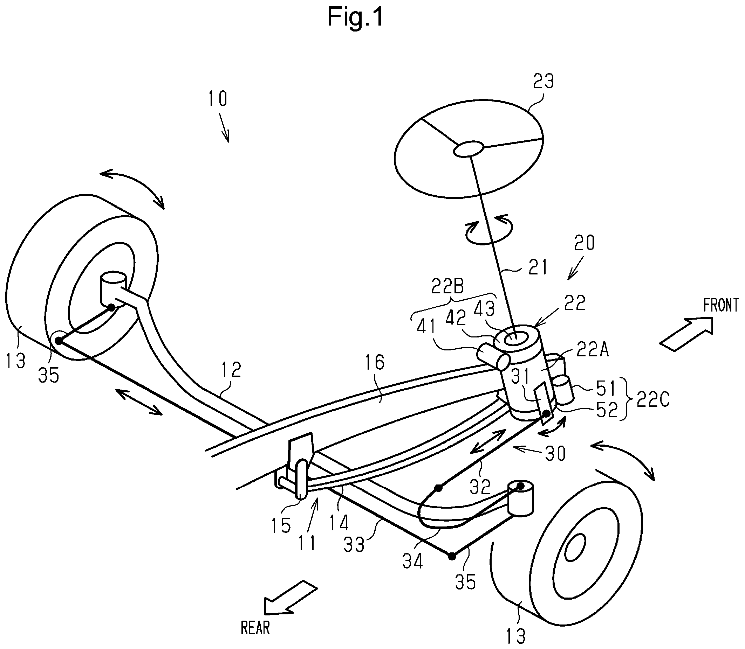

As illustrated in FIG. 1, a steering system 20 is an electric power steering system, and is installed in a vehicle 10 that is a cab-over-engine type vehicle, for example. The vehicle 10 includes a suspension 11 that is a rigid axle suspension. The suspension 11 supports a front axle 12. Steered wheels 13 that are front wheels are linked to both ends of the front axle 12. The suspension 11 includes a leaf spring 14. The leaf spring 14 is situated above the front axle 12, for example. The leaf spring 14 extends in a front-rear direction of the vehicle. Both ends of the leaf spring 14 are attached to a vehicle body frame 16 via a support member 15 such as a shackle or the like.

The steering system 20 includes a steering actuator 22. The steering actuator 22 is provided on a steering shaft 21. The steering actuator 22 includes a steering gearbox 22A, a first power assisting unit 22B, and a second power assisting unit 22C. The first power assisting unit 22B is provided to an upper portion of the steering gearbox 22A. The upper portion is a portion of the steering gearbox 22A that is close to the steering shaft 21. The second power assisting unit 22C is provided to a lower portion of the steering gearbox 22A. A first end portion of the steering shaft 21 is linked to the steering wheel 23. A second end portion of the steering shaft 21 is linked to the steering gearbox 22A via the first power assisting unit 22B.

The steering gearbox 22A is of the RBS type (recirculating ball screw type). The steering gearbox 22A is linked to the steered wheels 13 via a link mechanism 30. The link mechanism 30 includes a pitman arm 31, a drag link 32, and a tie rod 33. A base end of the pitman arm 31 is linked to a side portion of the steering gearbox 22A. The pitman arm 31 is swingable about the base end thereof, in the front-rear direction of the vehicle. A first end portion of the drag link 32 is rotatably linked to a distal end of the pitman arm 31. A second end portion of the drag link 32 is rotatably linked to a knuckle arm 34 of the right steered wheel 13, for example. Both ends of the tie rod 33 are linked to the right and left steered wheels 13 via tie rod arms 35.

Rotation of the steering wheel 23 is transmitted to the steering gearbox 22A via the steering shaft 21. The steering gearbox 22A converts rotational motion of the steering shaft 21 into swinging motion of the pitman arm 31. The swinging motion of the pitman arm 31 drives the drag link 32 in the front-rear direction of the vehicle. The knuckle arm 34 swings in conjunction with the drag link 32, thereby turning the steered wheels 13.

The first power assisting unit 22B includes a first motor 41, a first reducer 42, and a torque sensor 43. The first motor 31 is linked to the upper portion of the steering gearbox 22A via the first reducer 42. The first motor 41 operates to apply torque to the steering shaft 21 in the same direction as a steering direction of the steering wheel 23, in accordance with steering torque detected by the torque sensor 43. Torque of the first motor 41 is transmitted to the steering shaft 21 as a first assist force, via the first reducer 42. Thus, steering by the steering wheel 23 is assisted.

The second power assisting unit 22C includes a second motor 51 and a second reducer 52. The second motor 51 is linked to the lower portion of the steering gearbox 22A via the second reducer 52. The second motor 51 operates to apply torque to the steering shaft 21 in the same direction as the steering direction of the steering wheel 23, in accordance with the steering torque detected by the torque sensor 43. Torque of the second motor 51 is transmitted to the steering shaft 21 as a second assist force, via the second reducer 52 and the steering gearbox 22A. Thus, steering by the steering wheel 23 is assisted.

### <Configuration of Steering Gearbox 22A>

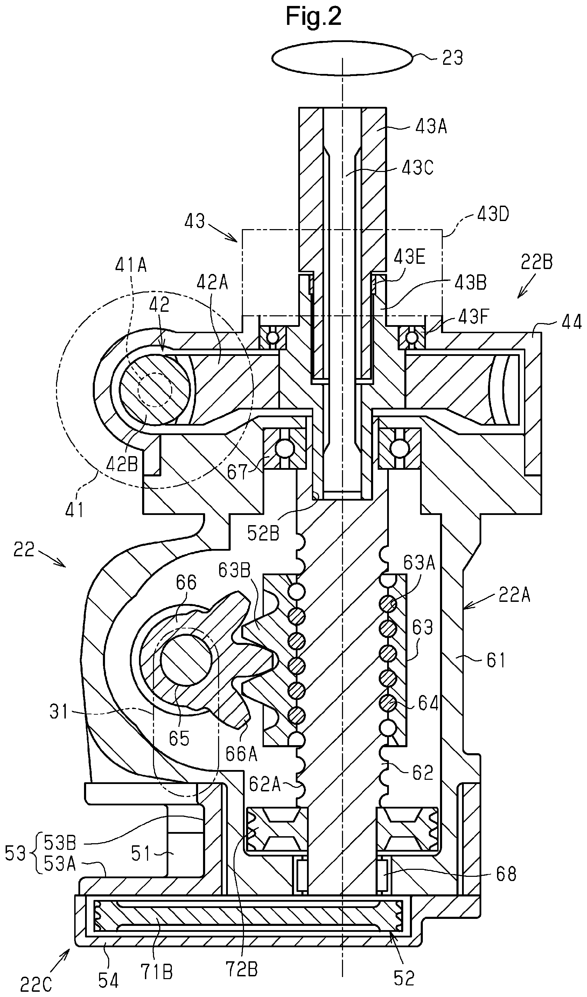

Next, a configuration of the steering gearbox 22A will be described in detail. As illustrated in FIG. 2, the steering gearbox 22A includes a first housing 61, a ball screw shaft 62, a ball screw nut 63, a plurality of balls 64, a sector shaft 65, and a sector gear 66. The first housing 61 accommodates the ball screw shaft 62, the ball screw nut 63, the plurality of balls 64, the sector shaft 65, and the sector gear 66.

When the steering gearbox 22A is installed in the vehicle 10, the ball screw shaft 62 is maintained in an orientation extending in an up-down direction relative to the vehicle 10. The ball screw shaft 62 is rotatably supported by the first housing 61 via a first bearing 67 and a second bearing 68. The first bearing 67 is, for example, a ball bearing, which is a type of rolling bearing, and includes an inner ring, an outer ring, and a plurality of balls interposed between the inner ring and the outer ring. The inner ring may be formed integrally with the ball screw shaft 62. The second bearing 68 is, for example, a needle bearing, which is a type of rolling bearing. Note, however, that the second bearing 68 may be a ball bearing or a plain bearing.

A first end portion of the ball screw shaft 62 is linked to the steering shaft 21 via the first power assisting unit 22B. The first end portion is an end portion of the ball screw shaft 62 on the side thereof oriented upward in the vehicle 10 when the steering gearbox 22 is installed in the vehicle 10. A second end portion of the ball screw shaft 62 on an opposite side from the first end portion thereof is an end portion of the ball screw shaft 62 that is oriented downward in the vehicle 10 when the steering gearbox 22 is installed in the vehicle 10. The ball screw shaft 62 includes a first groove 62A. The first groove 62A is a spiral groove provided on an outer peripheral face of the ball screw shaft 62.

The ball screw nut 63 has a tubular shape and includes a second groove 63A. The second groove 63A is a spiral groove provided on an inner peripheral face of the ball screw nut 63. The second groove 63A faces the first groove 62A in a radial direction of the ball screw nut 63. The ball screw nut 63 is screwed onto the ball screw shaft 62 via the plurality of balls 64. A spiral space surrounded by the first groove 62A and the second groove 63A functions as a rolling path along which the balls 64 roll. The ball screw nut 63 includes a plurality of rack teeth 63B. The rack teeth 63B are provided on an outer peripheral face of the ball screw nut 63. The rack teeth 63B are arrayed in an axial direction of the ball screw nut 63.

Note that the ball screw shaft 62, the ball screw nut 63, and the plurality of balls 64 make up a ball screw mechanism. The sector shaft 65 extends in a direction that is orthogonal to the axis of the ball screw nut 63 (direction orthogonal to the plane of the drawing in FIG. 2). The sector shaft 65 is supported by the first housing 61 via a bearing (omitted from illustration) so as to be rotatable with respect thereto. The sector shaft 65 includes an outer end portion exposed to the outside through the first housing 61. A base end of the pitman arm 31 is fixed to the outer end portion of the sector shaft 65. The sector shaft 65 is an output shaft of the steering gearbox 22, and operates in conjunction with the steered wheels 13.

The sector gear 66 is provided so as to be rotatable integrally with the sector shaft 65. The sector gear 66 is a gear having a fan-like shape, and includes a plurality of teeth 66A. The teeth 66A of the sector gear 66 mesh with the rack teeth 63B of the ball screw nut 63.

The rotation of the steering wheel 23 is transmitted to the ball screw shaft 62 via the steering shaft 21 and the first power assisting unit 22B. As the ball screw shaft 62 rotates, the ball screw nut 63 moves in the axial direction relative to the ball screw shaft 62. Thus, the sector gear 66 swings about the sector shaft 65. When the sector shaft 65 rotates in conjunction with the sector gear 66 swinging, the pitman arm 31 swings about the sector shaft 65.

### <First Power Assisting Unit 22B>

Next, a configuration of the first power assisting unit 22B will be described in detail. As illustrated in FIG. 2, the first power assisting unit 22B includes a second housing 44. The second housing 44 is linked to a first end portion of the first housing 61. The first end portion is an end portion of the first housing 61 on the side thereof oriented upward in the vehicle 10 when the steering gearbox 22 is installed in the vehicle 10. The second housing 44 accommodates the first reducer 42. The second housing 44 also supports the first motor 41 and the torque sensor 43.

The first motor 41 is attached to the outside of the second housing 44. The first motor 41 includes a first motor shaft 41A. The axis of the first motor shaft 41A is, for example, perpendicular to the axis of the ball screw shaft 41, and is also parallel to the axis of the sector shaft 44. The first motor shaft 41A passes through a peripheral wall of the second housing 44 and is inserted inside the second housing 44.

The torque sensor 43 is configured as follows. The torque sensor 43 includes an input shaft 43A, an output shaft 43B, a torsion bar 43C, and a detector 43D. The input shaft 43A and the output shaft 43B are linked to each other via the torsion bar 43C. The input shaft 43A and the output shaft 43B are hollow tubular members that have circular cross-sectional forms.

A first end portion of the input shaft 43A is linked to the steering wheel 23 via the steering shaft 21. A second end portion of the input shaft 43A is inserted into a first end portion of the output shaft 43B. An outer peripheral face of the input shaft 43A is maintained in a non-contact state with an inner peripheral face of the output shaft 43B. A plain bearing 43E is interposed between the outer peripheral face of the input shaft 43A and the inner peripheral face of the output shaft 43B. The input shaft 43A and the output shaft 43B are rotatable relative to each other via the plain bearing 43E.

A second end portion of the output shaft 43B is linked to the first end portion of the ball screw shaft 62 so as to be rotatable integrally therewith. The first end portion of the ball screw shaft 62 includes a linking hole 52B. The second end portion of the output shaft 43B is fitted into the linking hole 52B in the axial direction. Serration coupling between the output shaft 43B and the ball screw shaft 62 restricts relative rotation between the output shaft 43B and the ball screw shaft 62. Serration coupling is an example of an intermeshing connection between an inner member having external teeth formed and an outer member having internal teeth formed. The output shaft 43B is rotatably supported by the second housing 44 via a third bearing 43F so as to be rotatable with respect thereto.

The steering torque applied to the steering wheel 23 is transmitted to the input shaft 43A via the steering shaft 21. Thus, the input shaft 43A rotates. The rotation of the input shaft 43A is transmitted to the output shaft 43B via the torsion bar 43C. Thus, the output shaft 43B rotates. The torsion bar 43C is twisted in accordance with the steering torque. The detector 43D is provided so as to surround the outer peripheral face of the input shaft 43A, for example. The detector 43D detects the steering torque based on amount of twisting of the torsion bar 43C.

The first reducer 42 is configured as follows. The first reducer 42 includes a worm wheel 42A and a worm 42B. The worm wheel 42A is a disc-shaped body having a circular cross-sectional form, and is attached to an outer peripheral face of the output shaft 43B. The worm wheel 42A is rotatable integrally with the output shaft 43B. The worm 42B is linked to the first motor shaft 41A. The worm 42B is rotatable integrally with the first motor shaft 41A. The axes of the first motor shaft 41A and the worm 42B are aligned. The worm 42B meshes with the worm wheel 42A. An axial angle between the worm 42B and the worm wheel 42A is, for example, 90°.

Torque of the first motor 41 is transmitted to the ball screw shaft 41 via the first reducer 42. Torque is applied to the ball screw shaft 41 in the same direction as a steering direction of the steering wheel 23. Thus, steering by the steering wheel 23 is assisted.

### <Second Power Assisting Unit 22C>

Next, a configuration of the second power assisting unit 22C will be described in detail. As illustrated in FIG. 2, the second power assisting unit 22C includes a third housing 53. The third housing 53 includes a base portion 53A and a fitting portion 53B.

The base portion 53A is a plate-shaped portion of the third housing 53 that extends in a direction perpendicular to the axial direction of the ball screw shaft 62. The base portion 53A includes a first end face and a second end face. The first end face is an end face that is on a side closer to the first housing 61 in the axial direction of the ball screw shaft 62. The second end face is an end face opposite to the first end face, and is an end face that is on a side farther from the first housing 61 in the axial direction of the ball screw shaft 62.

The fitting portion 53B is provided on the first end face of the base portion 53A. The fitting portion 53B is a tubular body having a circular cross-sectional form. An outer peripheral face of a second end portion of the first housing 61 is fitted to an inner peripheral face of the fitting portion 53B. The first housing 61 is fixed to the third housing 53 by bolts (omitted from illustration) via attaching portions (omitted from illustration) provided on the outer peripheral face of the second end portion of the first housing 61.

A portion of the base portion 53A protrudes outward in the radial direction from an outer peripheral face of the fitting portion 53B. The second motor 51 is attached to the portion of the base portion 53A that protrudes outward in the radial direction from the outer peripheral face of the fitting portion 53B. The second motor 51 is attached to the base portion 53A from the first end face side of the base portion 53A. The second motor 51 includes a second motor shaft 51A. The second motor shaft 51A passes through the base portion 53A in the axial direction.

The second power assisting unit 22C includes a fourth housing 54. The fourth housing 54 is attached to the base portion 53A. The fourth housing 54 is a box-shaped body that covers the second end face of the base portion 53A. A profile of the fourth housing 54 corresponds to a profile of the base portion 53A. A distal end of the second motor shaft 51A is situated inside the fourth housing 54.

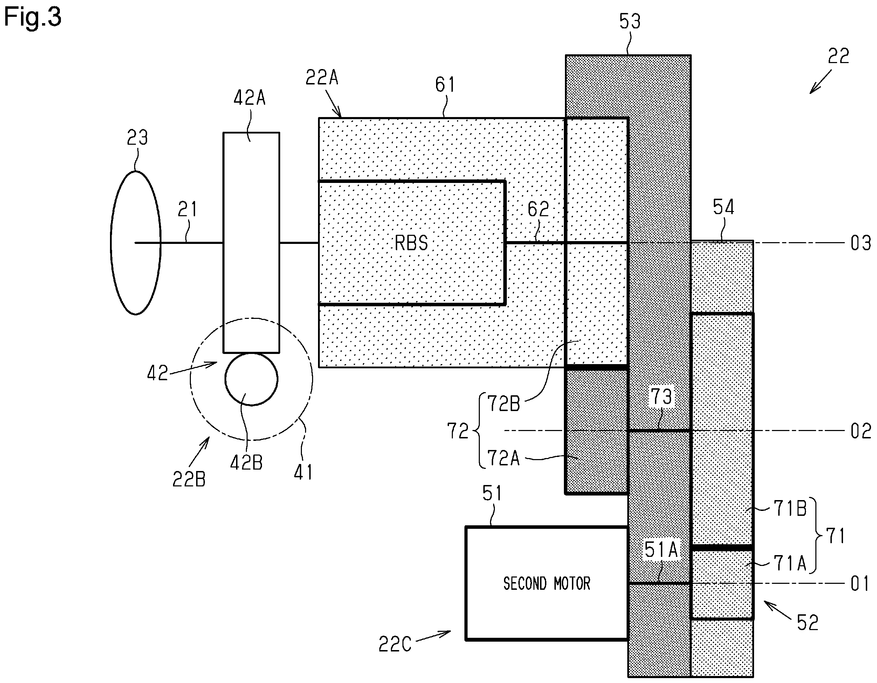

The second reducer 52 is configured as follows. As illustrated in FIG. 3, the second reducer 52 includes two stages of parallel-axis cylindrical gear pairs. That is to say, the second reducer 52 includes a first parallel-axis cylindrical gear pair 71 and a second parallel-axis cylindrical gear pair 72. The first parallel-axis cylindrical gear pair 71 includes a first gear 71A and a second gear 71B that mesh with each other. The second parallel-axis cylindrical gear pair 72 includes a third gear 72A and a fourth gear 72B that mesh with each other. The first gear 71A, the second gear 71B, the third gear 72A, and the fourth gear 72B are, for example, helical gears.

The first gear 71A is accommodated inside the fourth housing 54. The first gear 71A is linked to the second motor shaft 51A. The second motor shaft 51A and the first gear 71A are disposed coaxially. The second motor shaft 51A and the first gear 71A rotate integrally about a first axis O1, in conjunction with the second motor 51 being driven.

The second gear 71B is accommodated inside the fourth housing 54. The second gear 71B meshes with the first gear 71A. The third gear 72A is accommodated inside the third housing 53. The third gear 72A is linked to the second gear 71B via a shaft 73. The second gear 71B and the third gear 72A are disposed coaxially. The second gear 71B and the third gear 72A rotate integrally about a second axis O2.

The fourth gear 72B is accommodated inside the first housing 61. The fourth gear 72B is linked to the second end portion of the ball screw shaft 62. The ball screw shaft 62 and the fourth gear 72B are disposed coaxially. The ball screw shaft 62 and the fourth gear 72B rotate integrally about a third axis O3.

Note that the first axis O1, the second axis O2, and the third axis O3 are parallel to one another. Also, outside diameters of the first gear 71A, the second gear 71B, the third gear 72A, and the fourth gear 72B are large in the order of the first gear 71A, the third gear 72A, the fourth gear 72B, and the second gear 71B. That is to say, the first gear 71A has the smallest outside diameter, and the second gear 72B has the largest outside diameter.

Torque of the second motor 52 is transmitted to the ball screw shaft 62 via the first gear 71A, the second gear 71B, the third gear 72A, and the fourth gear 72B. Torque in the same direction as the steering direction of the steering wheel 23 is applied to the ball screw shaft 62, thereby assisting the steering of the steering wheel 23. The ball screw shaft 62 corresponds to an input shaft to which rotation is applied from the first reducer 42 and the second reducer 52. The sector shaft 65 corresponds to an output shaft or a linking member that operates in conjunction with the steered wheels 13.

### <Effects of Present Embodiment>

According to the present embodiment, the following effects are achieved.
(1) The steering system 20 includes the steering gearbox 22A, the first power assisting unit 22B, and the second power assisting unit 22C. The steering gearbox 22A includes the ball screw shaft 62, and also converts the rotation of the ball screw shaft 62 into steering actions of the steered wheels 13 of the vehicle. Converting the rotation of the ball screw shaft 62 into the steering actions of the steered wheels 13 of the vehicle means converting the rotation of the ball screw shaft 62 into rotation of the sector shaft 65. The first power assisting unit 22B applies the first assist force to the ball screw shaft 62. The second power assisting unit 22C applies the second assist force to the ball screw shaft 62. Accordingly, compared to when only the first assist force or the second assist force is applied to the ball screw shaft 62, assist force to be applied to the ball screw shaft 62 can be secured more readily.
(2) The first power assisting unit 22B is linked to the first end portion of the ball screw shaft 62. The first end portion is the end portion of the ball screw shaft 62 that is oriented upward in the vehicle when the steering gearbox 22A is installed in the vehicle. The second power assisting unit 22C is linked to the second end portion of the ball screw shaft 62. The second end portion is the end portion of the ball screw shaft 62 that is oriented downward in the vehicle when the steering gearbox 22A is installed in the vehicle. In this way, the first assist force and the second assist force can be applied appropriately and in a well-balanced manner from both end sides of the ball screw shaft 62.
(3) The first power assisting unit 22B includes the first motor 41 and the first reducer 42. The first motor 41 includes the first motor shaft 41A. The first reducer 42 reduces the rotations of the first motor 41. The second power assisting unit 22C includes the second motor 51 and the second reducer 52. The second motor 51 includes the second motor shaft 51A. The second reducer 52 reduces the rotations of the second motor 51. In this way, outputs of the first motor 41 and the second motor 51 and reduction ratios of the first reducer 42 and the second reducer 52 can be set individually. Accordingly, there is a high degree of freedom regarding designing output characteristics of the first power assisting unit 22B and the second power assisting unit 22C, and hence, regarding the specifications of the steering system 20.
(4) The first reducer 42 includes the worm wheel 42A and the worm 42B. The worm wheel 42A is linked to the first end portion of the ball screw shaft 62. The worm 42B is linked to the first motor shaft 41A, and meshes with the worm wheel 42A. The first reducer 42 is a so-called worm reducer.

The second reducer 52 includes the first parallel-axis cylindrical gear pair 71 and the second parallel-axis cylindrical gear pair 72. The first parallel-axis cylindrical gear pair 71 includes the first gear 71Aand the second gear 71B that mesh with each other. The second parallel-axis cylindrical gear pair 72 includes the third gear 72A and the fourth gear 72B that mesh with each other. The first gear 71A is linked to the second motor shaft 51A and rotates about the first axis O1. The second gear 71B and the third gear 72A are coaxially linked and rotate about the second axis O2. The fourth gear 72B is linked to the second end portion of the ball screw shaft 62 and rotates about the third axis O3. The second reducer 52 is a so-called parallel shaft reducer.

Worm reducers can provide a higher reduction ratio. Parallel shaft reducers can set a wide range of reduction ratios by combining a plurality of gear stages. Note, however, that, the second reducer 52, which is the parallel shaft reducer, tends to be larger in size than the first reducer 42, which is a worm reducer. Accordingly, the parallel shaft reducer can be placed in a lower portion of an engine compartment where there is relatively more space, which is advantageous in terms of installability into the vehicle, as compared to when the parallel shaft reducer is employed as the first reducer 42.

### <Other Embodiments>

The present embodiment may be carried out modified as follows.
- The torque sensor 43 may be provided separately from the first power assisting unit 22B.
- The steering system 20 can be applied to a steer-by-wire type steering system in which the steering wheel 23 and the steered wheels 13 are mechanically separated. **In** this case, for example, the ball screw shaft 60 and the steering wheel 23 are separated such that mechanical power transmission cannot be performed. Also, the first motor 41 and the second motor 51 function as steering motors that generate steering force. The steering force is force for steering the steered wheels 13.

## Claims

1. A steering system comprising:
a steering gearbox that includes a ball screw shaft, the steering gearbox being configured to convert rotation of the ball screw shaft into steering motion of steered wheels of a vehicle;
a first power assisting unit that is linked to a first end portion of the ball screw shaft; and
a second power assisting unit that is linked to a second end portion of the ball screw shaft, wherein
the first end portion is an end portion of the ball screw shaft that is oriented upward in the vehicle when the steering gearbox is installed in the vehicle,
the second end portion is an end portion of the ball screw shaft that is oriented downward in the vehicle when the steering gearbox is installed in the vehicle,
the first power assisting unit includes a first motor that includes a first motor shaft, and a first reducer that is configured to reduce rotations of the first motor,
the second power assisting unit includes a second motor that includes a second motor shaft, and a second reducer that is configured to reduce rotations of the second motor,
the first reducer includes
a worm wheel that is linked to the first end portion of the ball screw shaft, and
a worm that is linked to the first motor shaft and that meshes with the worm wheel,
the second reducer includes
a first parallel-axis cylindrical gear pair that includes a first gear and a second gear that mesh with each other, and
a second parallel-axis cylindrical gear pair that includes a third gear and a fourth gear that mesh with each other,
the first gear is linked to the second motor shaft and is configured to rotate about a first axis,
the second gear and the third gear are coaxially linked and are configured to rotate about a second axis, and
the fourth gear is linked to the second end portion of the ball screw shaft and is configured to rotate about a third axis.

2. The steering system according to claim 1, wherein the ball screw shaft and a steering wheel of the vehicle are linked to each other so as to be able to perform mechanical power transmission.

3. The steering system according to claim 1, wherein the ball screw shaft and a steering wheel of the vehicle are separated from each other so as not to be able to perform mechanical power transmission.
